# EUROPEAN PATENT APPLICATION

(11) **EP 3 047 910 A1**
(43) Date of publication of application: **27.07.2016**
(21) Application number: 14846549.5
(22) Date of filing: 17.09.2014
(51) Int. Cl.: B02C 23/08, C22B 21/06, B29B 17/02

(54) **SYSTEM AND METHOD FOR SEPARATING ALUMINIUM MATERIAL AND NON-FERROUS METALS AND PRODUCT OBTAINED**

(30) Priority: 17.09.2013 ES 201331346
(71) Applicant: Cao, Gaohao, 08830 Sant Boi De Llobregat (Barcelona) (ES); Cao, Wen Wen, 08830 Sant Boi de Llobregat (Barcelona) (ES); Santana Unguetti, Yeray, 08950 Esplugues de Llobregat (Barcelona) (ES); Santana Unguetti, Yonay, 43700 El Vendrell (Tarragona) (ES)
(72) Inventor: CAO, Wen Wen, E-08830 Sant Boi de Llobregat (Barcelona) (ES); CAO, Qizhen, E-43700 El Vendrell (Tarragona) (ES); SANTANA ROMERO, Juan Manuel, E-43700 El Vendrell (Tarragona) (ES)
(74) Representative: Isern-Jara, Nuria
(86) International application number: PCT/ES2014/070707
(87) International publication number: WO 2015/040259

(57) **Abstract**

The invention relates to a system and a method for separating aluminium and non-ferrous metals especially from plastic materials, and for separating said plastic materials from each other, comprising a first mill for receiving material to be separated, which is associated, in turn, with a second beater mill for receiving material milled by said first mill and beating the same, wherein said second mill is linked at least to a densimetric separating device associated with an electrostatic separating device.

## Description

### DESCRIPTION

### OBJECT OF THE INVENTION

The object of the present application is to register a system and a method for separating aluminium material and non-ferrous metals which include significant innovations and advantages.

More specifically, the invention proposes the development of a system, a method for separating aluminium material and non-ferrous metals from any plastic material, and different plastic materials from each other and the product obtained from said method.

### BACKGROUND OF THE INVENTION

The growing need to treat waste at both a domestic and industrial level is known. Ever more demanding environmental regulations and the increasing cost of raw materials emphasise the improvement of systems for treating waste in order to reduce it and even reuse the materials.

The need to reclaim non-ferrous materials, such as aluminium, from packaging or pieces that also include plastic material, is particularly pressing. In order to do so, there are methods and systems that do not offer a very high effectiveness and a low efficiency in separation.

The systems of the state of the art do not separate all the typology of the plastic, for example with electrostatic charge and without electrostatic charge, which is a drawback for the effectiveness of the separation methods.

Furthermore, the systems known do not achieve a continuous operation method or a modular arrangement that is easily adaptable to the needs of material separation, thus easily increasing the capacity of the system.

### DESCRIPTION OF THE INVENTION

The present invention has been developed for the purpose of providing a system that overcomes the aforementioned drawbacks, moreover offering other additional advantages that will become clear in light of the accompanying description below.

It must be noted that in the present description and claims "aluminium material" shall be understood as any material that includes, at least partially, aluminium in the composition thereof. In addition, "plastic material" may be any material of a plastic nature.

It is therefore an object of the present invention to provide a system for separating aluminium and non-ferrous metals especially from plastic materials, comprising a first mill for receiving material to be separated, which is associated, in turn, with a second beater mill for receiving material milled by said first mill and beating the same, wherein said second mill is linked at least to a densimetric separating device associated with an electrostatic separating device.

Additionally, said system may have a separator for non-ferrous material between the first mill and the second mill and at least one extractor fan and a cyclone separator between the second mill and the densimetric separating device or sieve.

Preferably, a plurality of silos respectively linked to the first mill, the second mill and to the electrostatic separating device are provided, wherein said silos are capable of receiving and feeding material to be separated to the rest of the elements that make up the system.

The densimetric separating device is particularly in flow communication, at least partially, with said second mill, through a return conduit. This return conduit is equipped with at least one rejection fan and a cyclone separator. Preferably, the densimetric separating device is a densimetric table.

Said electrostatic separating device comprises at least one roller and a complementary curved arc at a distance from said roller, the roller and the arc being configured such that an electrostatic field is established between both, negatively charging the material to be separated that flows between the arc and the roller. Optionally, the electrostatic separator may comprise a plurality of rollers and complementary arcs, arranged such that the material to be separated describes a flow in series through said plurality of rollers and arcs. Furthermore, it may also be additionally equipped with a vibrating tray in order to supply the material to be separated.

Another object of the present invention is a method for separating aluminium and non-ferrous metals, comprising the stages:
a) a first milling of a material to be separated;
b) a second milling and beating of the material to be separated;
c) a densimetric separation of the material to be separated;
d) an electrostatic separation of the material to be separated.

Said method may include a stage for separating ferrous materials from the material to be separated between the first milling and the second milling. Furthermore, said method may include a stage for cyclone separation between the second milling and the densimetric separation.

As a result of these characteristics, a system and a method are obtained that enable an assembly of machines to be sequenced with which the aluminium materials, and in general non-ferrous metals, are separated from plastic material in a continuous manner, with a high yield that has not been achieved today with the processes known in the state of the art since this method and system exceed an efficiency of 99% in the recovery. Moreover, due to the configuration itself of the system, it is a modular assembly that is easily expandable if the separation needs increase, adapting to the dimensions and geometric distribution of the facility as a result of the flexibility when interconnecting different devices.

The system and method of the invention enable the separation of non-ferrous materials from the plastic materials, such as aluminium panels made up of different materials, aluminium pipes, aluminium pipes, blister strip, aluminium-plastic packaging, aluminium wire, different aluminium-plastic compounds, copper cables, fine-wire cable waste, solid urban waste with copper and aluminium; reaching a separation of the plastic material of 99.5%. Printed circuit board waste can also be separated, reaching a material recovery rate of up to 99.5% or more.

An additional advantage of the present invention is that the system and method followed enable the separation of the different typology of plastic material, for example with electrostatic charge and without electrostatic charge, which increases the yield of the separation.

Another object of the present invention is a product obtained from said method for separating aluminium and non-ferrous metals. Said product mainly includes aluminium material or any non-ferrous metal; although ferrous metal may be obtained if the method includes the stage for separating ferrous metals.

Other characteristics and advantages of the system, the method and the product obtained by said method, which are the object of the present invention, will become clear in light of the description of a preferred, though non-exclusive, embodiment, which, by way of a non-limiting example, is illustrated in the accompanying drawings, wherein:

### BRIEF DESCRIPTION OF THE DRAWINGS

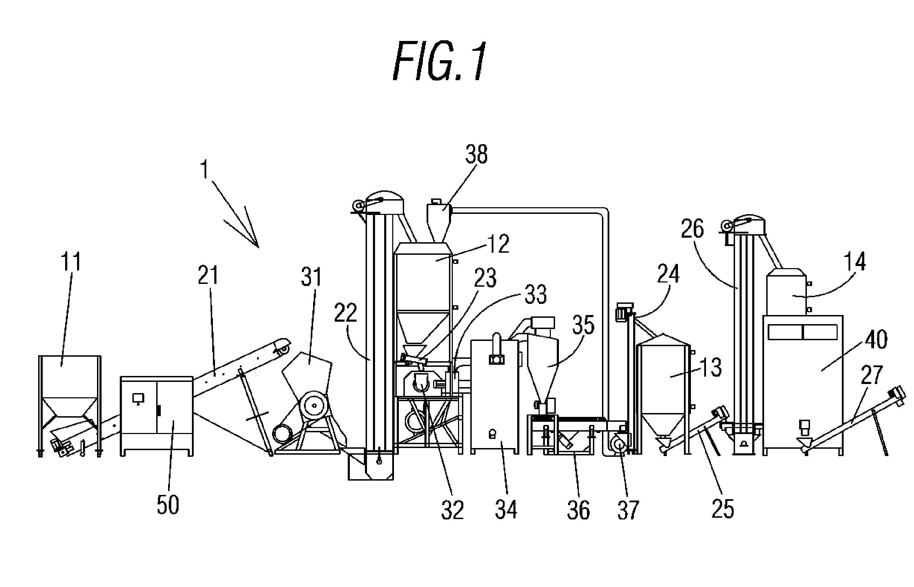

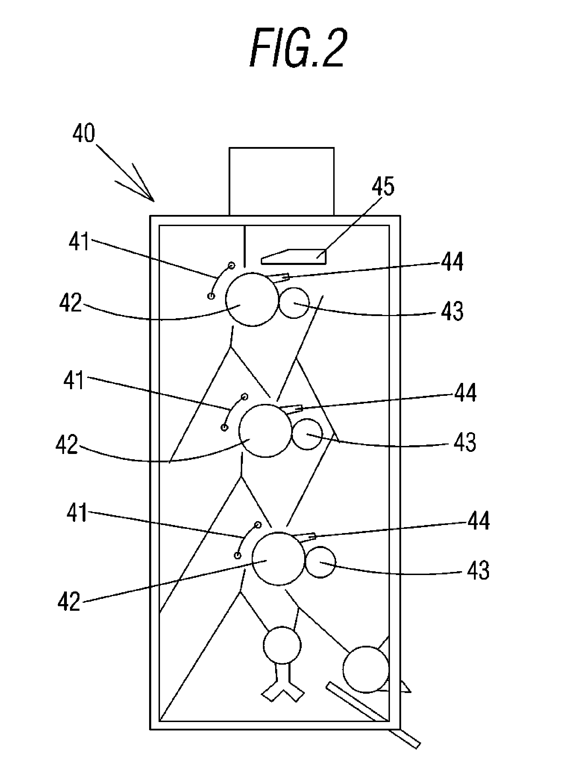

Figure 1.- Is a schematic elevation view of a system in accordance with the invention; and Figure 2.- Is a schematic profile view of an electrostatic separating device of the system of figure 1.

### DESCRIPTION OF A PREFERRED EMBODIMENT

In light of the aforementioned figures, in accordance with the adopted numbering, one may observe therein a preferred embodiment of the invention, which comprises the parts and elements indicated and described in detail below.

Figure 1 shows a schematic view of a separation system 1 for separating aluminium and non-ferrous metals, particularly from plastic material. The separation system 1 comprises a silo 11 in which the user places the raw material to be separated (not shown), i.e. forming part of an object made up of different pieces of a variety of materials. The material to be separated is transported from this silo 11 by a conveyor belt 21 to a first mill 31 which is associated, in turn, with a second mill 32 for receiving material milled by said first mill 31. Between each mill there are several components, such as an elevator 22 that carries material milled by the first mill 31 to a silo 12. This silo feeds said second mill 32 through a worm shaft 23, this second mill 32 does not cut the material to be separated but rather beats it, such that it considerably increases the yield of the method followed by the present separation system 1 in operation.

At the outlet of the second mill 32, the material milled and beaten is driven, due to an extractor fan, 33 towards a cyclone separator 35 to separate the dust from the heavier material to be recycled. The dust passes through an air filter 34, which collects the dust from the cyclone separator 35 and cleans the air for its subsequent release to the exterior.

The material to be separated that comes from the cyclone separator 35 arrives at a densimetric separating device or sieve, preferably a densimetric table 36 o sieve. On the densimetric table 36 the material can be selected depending on the specific needs of each case. Thus, the appropriate material continues to advance through the separation system 1 and that which does not fulfil the requirements returns to the silo 12 to be re-treated. They may have a rejection fan 37 and a cyclone separator 38 in a return conduit 28 arranged between said densimetric table 36 and the second mill 32.

The output material from the densimetric table 36 that does fulfil the pre-set requirements are deposited in a silo 13 by means of a worm shaft 24; the placement of this silo 13 enables the method followed to be regulated, thus accelerating it and increasing production. From this silo 13, the material continues through, for example, a worm shaft 25 to an elevator 26, it continues through a silo 14 and from there to an electrostatic separating device 40. As may be seen in figure 2, this electrostatic separating device 40 comprises a roller 42 and a complementary curved arc 41 at a distance from said roller 42, the roller 42 and the arc 41 being configured such that an electrostatic field is established between both, negatively charging the material to be separated that flows between the arc 41 and the roller 42. The number of rollers 42 and arcs 41 varies depending on the particular needs of each case; as such there may be a plurality of rollers 42 and complementary arcs 41, arranged such that the material to be separated describes a flow in series through said plurality of rollers 42 and arcs 41. The material falls from the vibrating tray 45 and passes through the roller 42 and arc 41, here an electric field is generated between the arc 41 and the roller 42 such that all the particles that make up the material to be separated are negatively charged. The conductive particles (not shown) jump with the rotation of the roller 42 due to the weak contact resistance with said roller 42. The non-conductive particles (not shown) follow the rotation path of the roller 42. A plane 43 and a brush 44 help detach the non-conductive particles from the roller 42, these non-conductive particles either fall to the base of the electrostatic separating device 40 or fall again between a roller 42 and an arc 41 and so on until the separation between conductive and non-conductive particles is achieved in accordance with the established requirements.

In order to control the entire separation system 1, a control box may be included from which the production of any device may be controlled and therefore the overall production.

Returning to figure 1, there may optionally be a ferrous material separator (not shown) at a point between the first mill 31 and the second mill 32. This ferrous material separator may be any which is available on the market, for which reason it shall not be described in more detail. Due to the connection flexibility between the different devices, it is possible to adapt this ferrous metal separator to the system, object of the invention.

Lastly, the now separated material lastly passes through a worm shaft 27 from where the product obtained from the following method for separating aluminium and non-ferrous metals is collected, which comprises the stages:
a) a first milling of a material to be separated;
b) a second milling and beating of the material to be separated;
c) a densimetric separation of the material to be separated;
d) an electrostatic separation of the material to be separated.

As previously mentioned, this method may include a stage for separating ferrous materials from the material to be separated between the first milling and the second milling. Furthermore, said method may include a stage for cyclone separation between the second milling and the densimetric separation.

The details, shapes, dimensions and other accessory elements, as well as the materials used in the system and method of the invention, may be suitably substituted for others which are technically equivalent, and do not diverge from the essential nature of the invention, nor the scope defined by the claims included below.

## Claims

1. A system (1) for separating aluminium and non-ferrous metals especially from plastic materials, and for separating said plastic materials from each other, **characterised by** the fact that it comprises a first mill (31) for receiving material to be separated, which is associated, in turn, with a second beater mill (32) for receiving material milled by said first mill (31) and beating the same, wherein said second mill (32) is linked at least to a densimetric separating device associated with an electrostatic separating device (40).

2. The system for separating aluminium and non-ferrous metals according to claim 1, **characterised by** the fact that it has a ferrous material separator between the first mill and the second mill (32).

3. The system for separating aluminium and non-ferrous metals according to claim 1, **characterised by** the fact that it has at least one extractor fan (33) and a cyclone separator (35) between the second mill (32) and the densimetric separating device.

4. The system for separating aluminium and non-ferrous metals according to claim 1, **characterised by** the fact that a plurality of silos (11, 12, 13, 14) are provided, which are respectively linked to the first mill (31), the second mill (32) and to the electrostatic separator device (40), wherein said silos (11, 12, 13, 14) are capable of receiving and feeding material to be separated.

5. The system for separating aluminium and non-ferrous metals according to claim 1, **characterised by** the fact that the densimetric separating device is in flow communication at least partially with said second mill (32), through a return conduit (28).

6. The system for separating aluminium and non-ferrous metals according to claim 1, **characterised by** the fact that the return conduit (28) is equipped with at least one rejection fan (37) and a cyclone separator (38).

7. The system for separating aluminium and non-ferrous metals according to claim 1, **characterised by** the fact that the densimetric separating device is a densimetric table (36) or sieve.

8. The system for separating aluminium and non-ferrous metals according to claim 1, **characterised by** the fact that the electrostatic separating device (40) comprises at least one roller (42) and a complementary curved arc (41) at a distance from said roller (42), the roller (42) and the arc (41) being configured such that an electrostatic field is established between both, negatively charging the material to be separated that flows between the arc (41) and the roller (42).

9. The system for separating aluminium and non-ferrous metals according to claim 8, **characterised by** the fact that said electrostatic separating device (40) comprises a plurality of rollers (42) and complementary arcs (41), arranged such that the material to be separated describes a flow in series through said plurality of rollers (42) and arcs (41).

10. The system for separating aluminium and non-ferrous metals according to claim 8, **characterised by** the fact that said electrostatic separating device (40) is additionally equipped with a vibrating tray (45) to supply the material to be separated.

11. A method for separating aluminium and non-ferrous metals **characterised by** the fact that it comprises the stages:
a) a first milling of a material to be separated;
b) a second milling and beating of the material to be separated;
c) a densimetric separation of the material to be separated;
d) an electrostatic separation of the material to be separated.

12. The method for separating aluminium and non-ferrous metals according to claim 11, **characterised by** the fact that a stage for separating ferrous materials from the material to be separated is included between the first milling and the second milling.

13. The method for separating aluminium and non-ferrous metals according to claim 11, **characterised by** the fact that a cyclone separation stage is included between the second milling and the densimetric separation.

14. A product obtained from the method for separating aluminium and non-ferrous metals according to any of the claims 11 to 13.
